Europäisches Patentamt

(19) European Patent Office

Office européen des brevets

(11) Numéro de publication : **0 173 002**
**B1**

(12) **FASCICULE DE BREVET EUROPÉEN**

(45) Date de publication du fascicule du brevet :
**13.04.88**

(21) Numéro de dépôt : **85106513.6**

(22) Date de dépôt : **28.05.85**

(51) Int. Cl.⁴ : **C 25 B 11/06**

(51) Int. Cl.⁴ : $C\ 25\ B\ 11/06$

(54) **Catalyseur pour electrolyseur de solutions basiques.**

(30) Priorité : **29.05.84 FR 8408428**

(43) Date de publication de la demande :
**05.03.86 Bulletin 86/10**

(45) Mention de la délivrance du brevet :
**13.04.88 Bulletin 88/15**

(84) Etats contractants désignés :
**BE DE FR GB SE**

(56) Documents cités :
**FR-A- 2 418 281**
**GB-A- 2 065 171**

(73) Titulaire : **ALSTHOM**
**38, avenue Kléber**
**F-75784 Paris Cedex 16 (FR)**

(72) Inventeur : **Bouet, Jacques c/o Laboratoires de Marcoussis**
**Dépt. Electrochimie Route de Nozay**
**F-91460 Marcoussis (FR)**

(74) Mandataire : **Weinmiller, Jürgen et al**
**Lennéstrasse 9 Postfach 24**
**D-8133 Feldafing (DE)**

## Description

La présente invention concerne un catalyseur pour électrolyseur de solutions basiques, notamment aqueuses, dans lequel de l'oxygène se dégage à l'anode et de l'hydrogène à la cathode.

Par le brevet français n° 2 418 281, on connaît une cathode pour électrolyseur à base de nickel fritté contenant un molybdate de nickel. Pour réaliser une telle cathode, on peut imprégner un support en nickel fritté par un premier trempage dans un molybdate d'ammonium ; on chauffe en atmosphère non réductrice à une température de l'ordre de 450 °C ; on effectue un deuxième trempage dans une solution d'un sel de nitrate de nickel et on chauffe à une température voisine de 450 °C environ. On peut également effectuer les deux trempages simultanément dans une solution aqueuse de molybdate d'ammonium et de nitrate de nickel stabilisée à l'ammoniaque.

On a constaté au cours du temps une dégradation des performances de tels catalyseurs pour l'électrolyse de l'eau en milieu basique à chaud sous forte densité de courant. On a trouvé que ce phénomène était lié à un accroissement de la surtension d'oxygène qui serait due à une modification de la structure du catalyseur.

Il se forme notamment une phase d'oxyhydroxyde de nickel de structure cristallographique $\gamma$ et des oxydes de molybdène dans lesquels la valence du molybdène existe sous plusieurs valeurs de + III à + VI.

Ce « glissement stœchiométrique » du catalyseur apparaît non seulement en régime de fonctionnement permanent de l'électrolyseur mais aussi pendant les périodes d'arrêt où les courants de fuite peuvent conduire jusqu'à l'inversion des polarités. En effet, dans ce dernier cas on observe à la cathode d'une part une dissolution de l'oxyde de molybdène qui se trouve ainsi perdu, et d'autre part une modification d'état de l'oxyde de nickel, ces phénomènes étant irréversibles.

La présente invention a pour but de réaliser un catalyseur du type molybdate de nickel mais présentant une structure plus stable dans le temps que les catalyseurs connus, c'est-à-dire moins sujet au phénomène de glissement stœchiométrique, que ce soit en régime normal de fonctionnement de l'électrolyseur, ou en périodes d'arrêt de ce dernier.

La présente invention a pour objet un catalyseur d'électrode pour électrolyseur de solutions basiques constitué d'un composé à base d'oxyde mixte de molybdène et de nickel, caractérisé par le fait que ledit composé est de la forme $(Ni_{1-x}Cd_x)MoO_4$ avec $0,02 \leqslant x \leqslant 0,06$. Pour x supérieur à 0,06, c'est-à-dire un rapport en poids Cd/Ni + Cd supérieur à 10 %, il y a démixtion du catalyseur. Pour x inférieur à 0,02, le glissement stœchiométrique du catalyseur réapparaît.

Ainsi, l'incorporation de cadmium dans le catalyseur au moment de sa réalisation oriente la réaction vers la formation de molybdate de nickel moins sujet à la dérive stœchiométrique.

La présente invention a également pour objet un procédé de réalisation d'un catalyseur selon l'invention.

Un tel procédé est caractérisé par le fait que l'on imprègne le support de l'électrode d'une solution contenant du paramolybdate d'ammonium, du nitrate de nickel et du nitrate de cadmium stabilisée à l'ammoniaque, que l'on réalise un grillage sous air à une température comprise entre 400 °C et 550 °C, que l'on effectue une réduction partielle sous atmosphère d'azote et d'hydrogène à une température comprise entre 400 °C et 550 °C, et que l'on opère un refroidissement sous atmosphère neutre.

Les nitrates de nickel et de cadmium peuvent être remplacés par des sulfates de nickel et de cadmium.

Selon un autre mode de préparation, on part d'une solution de paramolybdate d'ammonium et de sels de nickel et de cadmium, choisis parmi les nitrates et les sulfates. On réalise l'imprégnation du support du catalyseur et on précipite avec de la soude pour former les hydroxydes correspondants. Après un séchage, puis un lavage à l'eau distillée, on applique les traitements thermiques précités.

D'autres caractéristiques et avantages de la présente invention apparaîtront au cours de la description suivante de modes de réalisation donnés à titre illustratif mais nullement limitatif. Dans le dessin annexé :

— La figure 1 montre pour des électrodes de l'art antérieur et des électrodes selon l'invention l'évolution de la tension d'électrolyse U (volts) en fonction du temps t (heures).

— La figure 2 montre l'effet d'une inversion des polarités de l'électrolyseur sur des cathodes de l'art antérieur et des cathodes selon l'invention, E ; désigne les échantillons testés.

On élabore quatre catalyseurs A, B, C, D sur des cathodes en nickel fritté, A et B selon l'art antérieur et C et D selon l'invention.

Le catalyseur A est obtenu par le procédé à deux trempages et deux séchages à 450 °C comme indiqué plus haut selon l'enseignement du brevet français n° 2 418 281.

Le catalyseur B est obtenu par le procédé à trempage unique et un séchage à 450 °C comme précisé également dans le brevet français précédent.

Les catalyseurs C et D selon l'invention sont obtenus de la manière suivante. On utilise une solution d'imprégnation présentant la composition qui suit :

— Paramolybdate d'ammonium

2

**0 173 002**

| | |
|---|---|
| $(NH_4)_6Mo_7O_{24}$, 4 $H_2O$ | 235,4 g/litre (2 moles Mo/l) |
| — Nitrate de nickel | |
| $(NiNO_3)_2$, 6 $H_2O$ | 581,6 g/litre (2 moles Ni/l) |
| — Nitrate de cobalt | |
| $Cd(NO_3)_2$, 4 $H_2O$ | 32 g/litre |

ceci correspond à un pourcentage Cd/Ni égal à 10 % en poids.

Après imprégnation d'un support de nickel fritté à l'aide de cette solution, on effectue un grillage à l'air pendant une heure à 450 °C pour le catalyseur C et à 550 °C pour le catalyseur D. On réalise ensuite une réduction partielle en atmosphère d'azote avec 10 % d'hydrogène pendant une heure à 450 °C pour le catalyseur C et à 550 °C pour le catalyseur D. On refroidit ensuite sous atmosphère neutre.

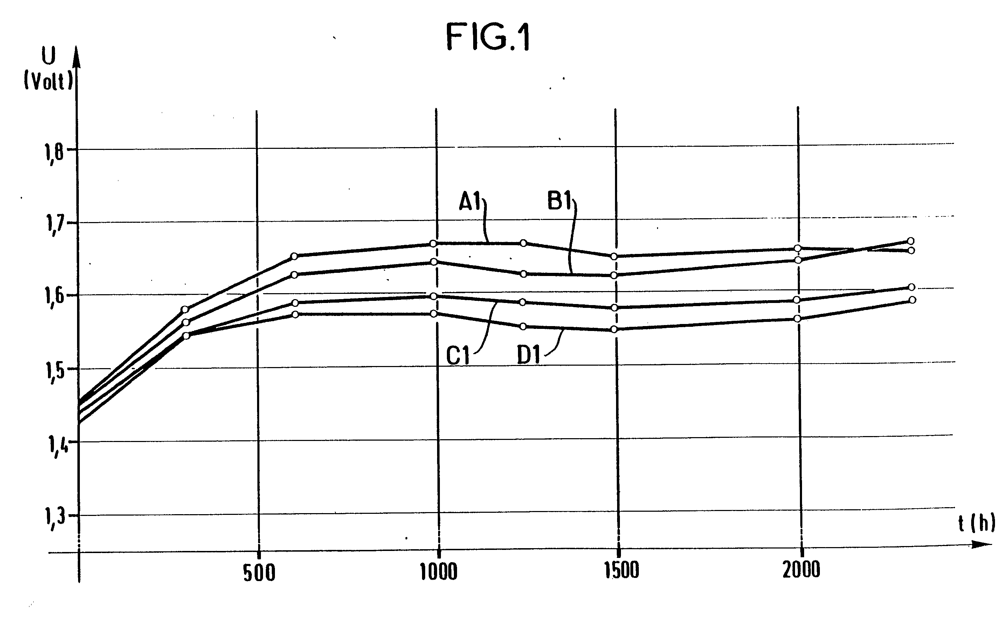

On a reporté dans la figure 1 l'évolution de la tension d'électrolyse U en fonction du temps t lorsque l'on met en œuvre les quatre catalyseurs A, B, C, D.

L'électrolyte est une solution aqueuse de potasse 10N, la température est de 80 °C et la densité de courant 1 A/cm². 

On a référencé $A_1$, $B_1$, $C_1$, $D_1$, les courbes correspondant aux catalyseurs A, B, C, D. On voit donc que la perte d'activité en régime de fonctionnement permanent est moins importante pour les catalyseurs selon l'invention.

La stabilisation relative de la valence III du nickel consécutive à l'introduction du cadmium est à l'origine de la stabilité du catalyseur selon l'invention.

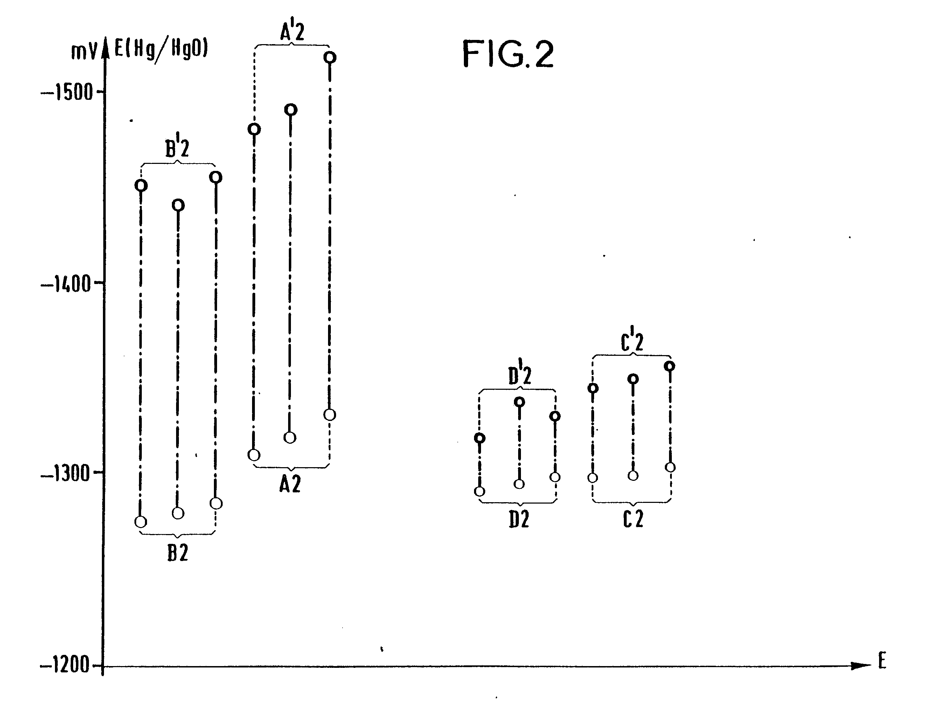

Pour étudier la tenue à l'inversion des cathodes munies des catalyseurs selon l'invention, on prépare des groupes de trois échantillons de chaque type A, B, C, D que l'on qualifie $A_2$, $B_2$, $C_2$, $D_2$. On mesure la polarisation E (mvolts) des cathodes obtenues par rapport à une électrode témoin (Hg/HgO) ; les résultats sont reportés dans la figure 2.

On refait les mêmes mesures après une inversion de polarité de l'électrolyseur : $A_2$, $B_2$, $C_2$, $D_2$ sont devenus $A'_2$, $B'_2$, $C'_2$, $D'_2$. On observe que pour les cathodes de l'art antérieur ($A'_2$, $B'_2$), la perte de tension est de l'ordre de 200 mvolts en moyenne, alors que pour les cathodes selnon l'invention ($C'_2$, $D'_2$), cette perte de tension n'est que de 50 mvolts.

La tenue à l'inversion du catalyseur selon l'invention utilisé en cathode est donc nettement meilleure qu'auparavant.

Bien entendu l'invention n'est pas limitée aux modes de réalisation qui viennent d'être décrits.

Ainsi, pour le procédé de fabrication du catalyseur selon l'invention, on peut opérer de la façon suivante. On part d'une solution de paramolybdate d'ammonium et de sels de nickel et de cadmium choisis parmi les nitrates et les sulfates. On réalise l'imprégnation du support de nickel fritté et on précipite les hydroxydes correspondants avec de la soude à 125 g/litre. Après séchage à 60 °C pendant 15 heures et lavage à l'eau distillée, on applique les traitements thermiques décrits antérieurement.

D'autres conditions équivalentes de mise en œuvre pourront être prévues.

**Revendications**

1. Catalyseur d'électrode pour électrolyseur de solutions basiques constitué d'un composé à base d'oxyde mixte de molybdène et de nickel, caractérisé par le fait que ledit composé est de la forme $(Ni_{1-x}Cd_x)MoO_4$ avec $0,02 \leqslant x \leqslant 0,06$.

2. Procédé de préparation d'une électrode munie du catalyseur selon la revendication 1, caractérisé par le fait que l'on imprègne le support de l'électrode d'une solution stabilisée à l'ammoniaque contenant du paramolybdate d'ammonium et des sels de nickel et de cadmium choisis parmi les nitrates et les sulfates que l'on réalise un grillage à l'air à une température comprise entre 400 °C et 550 °C, que l'on effectue une réduction partielle sous atmosphère d'azote et d'hydrogène à une température comprise entre 400 °C et 550 °C, et que l'on opère un refroidissement sous atmosphère neutre.

3. Procédé de préparation d'une électrode munie du catalyseur selon la revendication 1, caractérisé par le fait qu'on imprègne le support de l'électrode d'une solution contenant du paramolybdate d'ammonium et des sels de nickel et de cadmium choisis parmi les nitrates et les sulfates, qu'on précipite avec de la soude les hydroxydes correspondants, qu'on sèche, qu'on lave à l'eau, qu'on réalise un grillage à l'air à une température comprise entre 400 °C et 550 °C, qu'on effectue une réduction partielle sous atmosphère d'azote et d'hydrogène à une température comprise entre 400 °C et 550°C et que l'on opère un refroidissement sous atmosphère neutre.

**Claims**

1. A electrode catalyst for an electrolyzer of basic solutions, the catalyst being constituted by a compound based on a mixed oxide of molybdenum and nickel, characterized by the fact that the said compound is of the form $(Ni_{1-x}Cd_x)MoO_4$ where $0.02 \leqslant x \leqslant 0.06$.

2. A method of preparing an electrode provided with a catalyst according to claim 1, characterized by the fact that the electrode support is impregnated with an ammonia stabilized solution containing ammonium paramolybdate and salts of nickel and of cadmium chosen from nitrates and sulfates, that air roasting is performed at a temperature lying between 400 °C and 550 °C, that partial reduction is preformed under an atmosphere of nitrogen and hydrogen at a temperature lying between 400 °C and 550 °C, and that cooling is performed under a neutral atmosphere.

3. A method of preparing an electrode provided with a catalyst according to claim 1, characterized by the fact that the electrode support is impregnated with a solution containing ammonium paramolybdate and salts of nickel and of cadmium chosen from nitrates and sulfates, that the corresponding hydroxides are precipitated with soda, that drying is performed, that washing with water is performed, that roasting in air at a temperature lying between 400 °C and 550 °C is performed, that partial reduction is performed under an atmosphere of nitrogen and hydrogen at at temperature lying between 400 °C and 550 °C, and that cooling is performed under a neutral atmosphere.

**Patentansprüche**

1. Elektrodenkatalysator für eine Elektrolysezelle für basische Lösungen, bestehend aus einem Stoff auf der Basis von Molybdän- und Nickel-Mischoxid, dadurch gekennzeichnet, daß der Stoff die Form hat $(Ni_{1-x}Cd_x)MoO_4$, mit $0,02 \leqslant x \leqslant 0,06$.

2. Verfahren zur Herstellung einer mit dem Katalysator gemäß Anspruch 1 ausgestatteten Elektrode, dadurch gekennzeichnet, daß der Elektrodenträger mit einer ammoniakstabilisierten Lösung imprägniert wird, welche Ammoniumparamolybdat und Nickel- sowie Cadmiumsalze aus der Gruppe der Nitrate und Sulfate enthält ; daß eine Luftröstung bei einer Temperatur zwischen 400 und 550 °C erfolgt, daß eine partielle Reduktion in einer Atmosphäre aus Stickstoff und Wasserstoff bei einer Temperatur zwischen 400 und 550 °C durchgeführt wird und daß eine Abkühlung in neutraler Atmosphäre erfolgt.

3. Verfahren zur Herstellung einer mit dem Katalysator nach Anspruch 1 ausgestatteten Elektrode, dadurch gekennzeichnet, daß der Elektrodenträger mit einer Lösung aus Ammoniumparamolybdat und Nickel- und Cadmiumsalzen aus der Gruppe der Nitrate und Sulfate imprägniert wird, daß die entsprechenden Hydroxide durch Soda ausgefällt werden, daß eine Trockung erfolgt, daß mit Wasser gewaschen wird, daß eine Röstung in Luft bei einer Temperatur zwischen 400 und 550 °C erfolgt, daß eine partielle Reduktion unter Stickstoff- und Wasserstoffatmosphäre bei einer Temperatur zwischen 400 und 550 °C ausgeführt wird, und daß eine Abkühlung in neutraler Atmosphäre erfolgt.

# FIG.1

FIG.2